# EUROPEAN PATENT SPECIFICATION

(11) **EP 1 741 345 B1**
(45) Date of publication and mention of the grant of the patent: **15.08.2007**
(21) Application number: 05253816.2
(22) Date of filing: 20.06.2005
(51) Int. Cl.: A23G 9/00

(54) **Frozen edible product**
Gefrorenes Lebensmittelprodukt
Produit alimentaire congelé

(43) Date of publication of application: 10.01.2007
(73) Proprietor: UNILEVER PLC, London EC4P 4BQ (GB); UNILEVER N.V., 3013 AL Rotterdam (NL)
(72) Inventor: Hillden, Gunvor Camilla Unilever Italia S.p.A., Rome 00142 (IT); Turan, Susan Margaret, Sharnbrook, Bedford, MK44 1LQ (GB)
(74) Representative: Hugot, Alain

(56) References cited:
- EP-A- 1 400 176
- EP-A- 1 525 801
- US-A- 5 256 438
- US-A1- 2003 147 995

## Description

### Field of the Invention

The present invention relates to a frozen edible product. It more particularly relates to a frozen edible product containing fresh frozen fruits. It also relates to a packaged frozen edible product providing at least 15% of the vitamin C RDA.

### Background of the invention

Fruit containing yoghurts and chilled desserts because of their perceived healthy benefits are more and more favoured by consumers. They nonetheless present some significant limitations. They cannot maintained their vitamin C content, they have a limited shelf, they do not have the qualities of fresh fruits.

There is a need for new products which, while retaining their vitamin C content and presenting an extended shelf life will at the same time provide the fruit goodness associated with fresh fruits together with the pleasure normally associated with ice cream.

### Tests and definitions

Unless defined otherwise, all technical and scientific terms used herein have the same meaning as commonly understood by one of ordinary skill in the art (e.g. in frozen food manufacture). Definitions and descriptions of various terms and techniques used in frozen confectionery manufacture are found in "Ice Cream", 6th Edition R.T. Marshall, H.D. Goff and R.W. Hartel, Kluwer Academic / Plenum Publishers, New York 2003.

### Frozen aerated confection

The term "frozen aerated confection" as used in this specification means a sweet-tasting fabricated foodstuff intended for consumption in the frozen state (i.e. under conditions wherein the temperature of the foodstuff is less than 0°C, and preferably under conditions wherein the foodstuff comprises a significant amount of ice). The term "aerated" means that the frozen confection has an overrun of at least 30%. Frozen aerated confections are made by freezing a pasteurised mix of ingredients. Overrun is typically produced by intentionally incorporating gas into the product, such as by mechanical agitation. The gas can be any food-grade gas such as air, nitrogen or carbon dioxide.

### Fats

Fats are largely made up of triglycerides (approximately 98%), together with minor amounts of other components such as phospholipids and diglycerides. Triglycerides are esters of glycerol with three fatty acids. Fatty acids which have no carbon-carbon double bonds are said to be saturated (herein abbreviated as SAFA), whereas fatty acids that contain one or more carbon-carbon double bonds are said to be monounsaturated (abbreviated as MUFA) and polyunsaturated (PUFA) respectively. Fats that are liquid at ambient temperatures are often referred to as oils. In this specification the term "fat" includes such oils. The SAFA, MUFA and PUFA contents of fats and oils are given in "The Lipid Handbook", Second Edition, Authors Frank D Gunstone

### Dairy products

Separated into Milk fat, milk solids non-fat and yoghurt

### Milk Fat

Milk fat is largely made up of triglycerides (approximately 96%), together with minor amounts of other components such as phospholipids and diglycerides. Triglycerides are esters of glycerol with three fatty acids. Milkfat contains a wide range of triglycerides resulting in a wide melting range +40 to -40°C. Sources of milkfat include cream, butter, butteroil, concentrated milk, milk and yoghurt.

### Milk solids non-fat (and other protein sources)

Milk solids non-fat contains both milk protein and milk sugars. For example, skimmed milk powder typically comprises 37% milk protein, 55% lactose and 8% milk minerals. Sources of milk protein include skim milk, concentrated skim milk, milk powders (such as skimmed milk powder), caseins, caseinates (such as sodium and/or calcium caseinates) whey, whey powders and whey protein concentrates/isolates. Other sources of proteins used in ice cream include soy protein, wheat protein, barley protein and lupin protein.

### Yoghurt

Yoghurt is produced by the fermentation of pasteurised milk with the cultures *Lactobacillus bulgaricus* and *Streptococcus thermophilus* and must contain at least 1 000 000 live colony forming units per gram.

### Sweetener

Sweetener means a mono-, di- or oligo-saccharide containing from three to ten monosaccharide units joined in glycosidic linkage, or a corn syrup, or a sugar alcohol, or a mixture thereof. Sweeteners include sucrose, fructose, lactose (for example from the source of milk protein), dextrose, invert sugar, corn syrup, maltodextrin, and sugar alcohols.

### Free Sugars

The term "free sugars" is defined as in "Diet, nutrition and the prevention of chronic diseases" - Report of a Joint WHO/FAO Expert Consultation, WHO Technical Report Series 916, WHO, Geneva, 2003. Thus free sugars are all mono and disaccharides added by the manufacturer, cook or consumer plus sugar naturally present and sourced from honey, syrups and juices. Free sugars do not include sugars naturally present and sourced from fruit or milk.

### Emulsifiers

The term "emulsifier" as used herein refers to surface active substances used added to mixes for frozen aerated confections, and are described in "Ice Cream", 6th Edition, pages 85-86. Emulsifiers include mono- and di-glycerides of saturated or unsaturated fatty acids (e.g. monoglyceryl palmitate - MGP), polyoxyethylene derivatives of hexahydric alcohols (usually sorbitol), glycols, glycol esters, polyglycerol esters, sorbitan esters, stearoyl lactylate, acetic acid esters, lactic acid esters, citric acid esters, acetylated monoglyceride, diacetyl tartaric acid esters, polyoxyethylene sorbitan esters (such as polysorbate 80), sucrose esters, lecithin, egg and egg yolk. The term also includes mixtures of any the above. *Fats and oils may include small amounts of substances such as mono or diglycerides or phospholipids. The term "emulsifier" does not include such molecules when they are naturally present in the fat in small quantities.*

### Stabilizers

The term "stabilizer" as used herein refers to hydrocolloids added to mixes for frozen aerated confections, and are described in "Ice Cream", 6th Edition, They can for example be locust bean gum, carrageenan, guar gum, gelatin, psyllium, modified starch, sodium carboxymethylcellulose, microcrystalline cellulose, methyl and methylethyl celluloses, hydroxypropyl and hydroxypropylmethyl celluloses, microcrystalline cellulose, low and high methoxyl pectins, xanthan gum, gum arabic, gum ghatti, gum karaya, gum tragacanth, alginates and mixtures thereof.

### Individually quick frozen (IQF) fruits

Fruit that has been picked, inspected, rinsed and decontaminated and after that possibly cut before quick freezing, but not pasteurised or processed. These pieces are not thawed until the consumer puts the product in her/his mouth. Decontamination is a process by which a 2-log reduction of microbial content is achieved. Such decontamination is for example achieved by chlorine wash.

### Processed fruits

Fruits that have been processed with sugar or cooked.

### Recommended dietary allowances (RDA)

The RDA Vitamin C is 60mg as defined in the annex to 'Council Directive 90/496/EEC of 24 September 1990 on nutrition labelling for foodstuffs'.

### Brief Description of the Invention

It is the first object of the present invention to provide a frozen edible product comprises:
5 to 90% (w/w) fruits, preferably 10 to 50% more preferably less than 30%,
5 to 90% (w/w) of a yoghurt based frozen confection, preferably more than 40% and
5 to 90% (w/w) of cereals, preferably 10% to 50%, more preferably less than 30%
wherein the yoghurt based frozen confection comprises
35% to 55% (w/w) yoghurt and 45% to 65% of a mix comprising sugars, dairy products, stabilisers and emulsifiers ,

Preferably, the yoghurt based frozen confection has an overrun of between 60% and 150%, preferably over 80%, more preferably between 100% and 130%

The addition of sugars, stabilisers and emulsifiers to the yoghurt provides the required spoonability at a temperature of between -20 C and -15C, preferably at -18C..

Preferably, the fruits of the frozen edible product of the invention comprises 35% to 60% (w/w) of individually quick frozen fruits. Preferably also, the fruits comprises 35% to 65% of processed fruits. This blend of IQF fruits and processed fruits allows to deliver both the nutritional elements preserved by freezing in the IQF fruits and the taste and pleasure coming from processed fruits. More preferably the fruits contains 45% to 55% (w/w) of IQF fruits.

Preferably also, above the frozen edible product according to the invention contains acerola cherry, preferably in the form of juice concentrate. This , in combination with the fruits already present, allows for the delivery of least 15% of the Vitamin C RDA, preferably at least 30%, more preferably at least 50%, while allowing for the use of a wide range of fruits together with not requiring too big fruit portions. It must be remembered in that respect that 18g of strawberry only delivers 15% of the vitamin C RDA.

Preferably also the cereals are coated with a moisture barrier, more preferably with fat, even more preferably with a low SAFA fat. These cereals provide the slow release carbohydrates necessary to a healthy diet and also provides a feeling of satiety.

It is the second object of the present invention to provide a frozen edible product according to the invention in an individual packaging providing at least 15% of the vitamin C RDA, preferably at least 30%, more preferably at least 50%.

In a first preferred embodiment of the invention, the frozen edible product in individual packaging comprises a top fruit layer, an intermediate aerated yoghurt based layer and a base cereal layer wherein the intermediate yoghurt based layer comprises 35% to 55% (w/w) yoghurt and 45% to 65% of a mix comprising sugars, dairy products, stabilisers and emulsifiers , the yoghurt based layer having an overrun of between 60% and 150%, preferably over 80%, more preferably between 100% and 130%.

Preferably, the top fruits layer represents 5 to 90% (w/w) preferably 10 to 50% more preferably less than 30%, of the total frozen edible product. Preferably also the intermediate yoghurt based layer represents 5 to 90% (w/w), preferably more than 40% of the total frozen edible confection. Preferably also the base cereal layer represents 5 to 90% (w/w), preferably 10% to 50%, more preferably less than 30% of the total frozen edible product.

Preferably, the fruit layer of the frozen edible product of the invention comprises 35% to 60% (w/w) of individually quick frozen fruits. Preferably also, the top fruit layer comprises 35% to 65% of processed fruits. This blend of IQF fruits and processed fruits allows to deliver both the nutritional elements preserved by freezing in the IQF fruits and the taste and pleasure coming from processed fruits. More preferably the fruits contains 45% to 55% (w/w) of IQF fruits.

Preferably also, above the top fruit layer is a glaze containing acerola cherry in the form of juice concentrate. This glaze, in combination with the fruits present in the top layer, allows for the delivery of least 15% of the Vitamin C RDA, preferably at least 30%, more preferably at least 50%, while allowing for the use of a wide range of fruits together with not requiring too big fruit portions. It must be remembered in that respect that 30g of strawberry only deliver 15% of the vitamin C RDA. In an alternative preferred embodiment the acerola is introduced in the yoghurt based layer. An other unexpected benefit provided by this glaze is that it prevents the development of frost on the fruit layer during storage.

In a second preferred embodiment of the invention, the frozen edible product comprises frozen fruits, frozen cereals and frozen yoghurt based granules sintered together in a bar.

### Detailed Description of the Invention

A frozen edible product according to the invention comprises a top fruit layer, an intermediate yoghurt based layer and a bottom cereal layer. The top fruit layer is covered with a glaze. The whole product is in a container, preferably transparent, and sealed by a lid or a flexible film.

In the following examples, the yoghurt based layer has the following composition:

| | % |
|---|---|
| SKIMMED MILK CONC 38%TS | 10 |
| CREAM 36% FAT | 4.7 |
| SUCROSE DRY | 7 |
| LF9 | 6.8 |
| LOCUST BEAN GUM | 0.15 |
| MONODIGLYCERIDES SAT | 0.15 |
| MONODIGLYCERIDES PART UNSAT | 0.15 |
| DEXTROSE MONO HYD 68%TS | 11 |
| YOGHURT WHOLE CHILLED | 45 |
| WATER | 15.05 |
| | 100% |

The acerola juice glaze has the following composition

| | |
|---|---|
| Fructose syrup | 80 % |
| Lemon juice conc | 1% |
| Pectin | 0.5 % |
| Acerola juice conc | 16.25 % |
| Water | 2.25 % |
| | 100 % |

Using the above ingredients, the following frozen products were made

### Example 1

### Yoghurt mix manufacture:

In a jacketed 500 litre mix tank, water is added at 85°C, then milk ingredients, sugar, stabilizers, emulsifier, butteroil (cream) are added and mixed with high shear mixer. The premix is heated with a plate heat exchanger to 83°C and homogenized with a Crepaco single stage valve homogeniser at 300bar. After holding at 83°C for 15 seconds the mix is cooled with a plate heat exchanger to 5°C.The yoghurt is then added and mixed well and the mix held at this temperature for at least two hours prior to freezing.

### Freezing process

The aged mix was processed through an ice cream freezer (Crepaco W104 freezer with a series 80 dasher operating at 4 bar barrel pressure). Ice cream was produced at a mix throughput of 250 l/hr at 100% overrun with an extrusion temperature of -7.0°C

### Fruits:

IQF fruit,
Processed fruit - mixed with sugars and optionally heated
Acerola: as supplied as 42 BX juice concentrate (Wild) or made up into a glaze

Cereal - as supplied by manufacturer: composition (Oat flakes, glucose-fructose syrup, barley flakes, sugar, vegetable palm oil, wheat flakes, extruded rice (rice, sugar, wheat, gluten, salt and malt), desiccated coconut, salt.)

An individual layered product was produced by dosing in layers of cereal, then yoghurt based mix, then fruits followed by acerola glaze in following proportions:
8.5g cereal : 43g yoghurt: 20g fruit & 4g glaze:
11 % cereal : 57% yog: 27% fruit: 5% glaze:
dry cereal: 8.5g dosed into cup as received from supplier (Crispy Foods)
yoghurt mix: made as in freezing process , 43g dosed on top of cereal
fruit: 10g fruits of the forest blend (Ital Canditi, Italy) added, followed by 10g IQF raspberry crumb (SVZ), followed by 4g acerola fructose glaze

Products were sealed and hardened in a blast freezer at -35°C for 30 minutes, then stored at -18°C. CUP contained at least 30mg Vitamin C

### Example 2

As for example a a product was produced by placing layers of cereal mixed with glucose-fructose syrup (2:1 ratio by weight) into the bottom of a tray (of dimensions 30cm by 20cm) and pressing down by hand, then spreading the aerated yoghurt mix held at a temperature between -7 and -10C into a layer, then placing fruits on top, using sufficient force to indent into ice cream layer, followed by acerola glaze in a then cutting into bars of 90g weight with the following ratio of ingredients
12g cereal & 6g glucose fructose syrup: 38g yoghurt mix: 30g fruit & 4g glaze:
20% cereal : 42% yog mix: 34% fruit: 4% glaze:
Per bar the composition was as follows:
cereal: 12g cereal as received from supplier (Crispy Foods) mixed with 6g glucose-fructose syrup
yoghurt mix: made as in freezing process 1, 38g dosed on top of cereal
fruit: 10g Mango fruit preparation (Wild), 10g IQF strawberry, 10g IQF raspberry crumb (SVZ), followed by 4g acerola fructose glaze
BAR contained at least 30mg Vitamin C

### Example 3

### Yoghurt mix manufacture:

In a jacketed 500 litre mix tank, water is added at 85°C, then milk ingredients, sugar, stabilizers, emulsifier, butteroil (cream) are added and mixed with high shear mixer. The premix is heated with a plate heat exchanger to 83°C and homogenized with a Crepaco single stage valve homogeniser at 300bar. After holding at 83°C for 15 seconds the mix is cooled with a plate heat exchanger to 5°C.The yoghurt is then added and mixed well and the mix held at this temperature for at least two hours prior to freezing.

### Freezing process 2

Particle formation: The liquid mix at 5°C was loaded in to a mix chamber of 5 litres capacity which fed directly into a dripping nozzle of 1 mm internal diameter. The liquid drops in turn fell into liquid nitrogen where they were rapidly frozen into approximately spherical balls. The products were then placed at -25°C until required for product formation

Cereal clusters, fruit pieces and yoghurt mix were mixed in the following ratio
24g yoghurt based mix: 12g fruit/aceroia : 12g cereal
50% yog as liquid nitrogen frozen shots: 25% fruit: 25% cereal
fruit: 6g strawberry/acerola fruit preparation (Colworth) plus 6g IQF raspberry crumb (SVZ),

The frozen mixture was placed in a 100ml chamber and pressed between 2 stainless steel plates with sufficient force () and time (5 seconds) to sinter the clusters together without losing the visual integrity of the individual pieces.

Optionally a sheet of edible rice paper can be placed between the mixture and each plate resulting in the product contained within 2 sheets of rice paper (giving improvements in stability of bar and to enable product to be held)

Products were then stored at -18°C.

## Claims

1. Frozen edible product comprising 5 to 90% (w/w) fruits, preferably 10 to 50% more preferably less than 30%, 5 to 90% (w/w) of a yoghurt based frozen confection, preferably more than 40% and 5 to 90% (w/w) of cereals, preferably 10% to 50%, more preferably less than 30%, wherein the yoghurt based frozen confection coomprises 35% to 55% (w/w) yoghurt and 45% to 65% of a mix comprising sugars, dairy products, stabilisers and emulsifiers

2. Frozen edible product according to claim 1 wherein the yoghurt based frozen confection has an overrun of between 60% and 150%, preferably over 80%, more preferably between 100% and 130%

3. Frozen edible product according to claim 1 or 2 wherein the fruits comprises 35% to 60% (w/w) of individually quick frozen fruits.

4. Frozen edible product according to claim 1 or 2 wherein the fruits comprise 35% to 65% (w/w) of processed fruits.

5. Frozen edible product according to claims 1 to 4 containing acerola cherry,

6. Frozen edible product according to claims 1 to 4 containing acerola cherry juice

7. Frozen edible product according to claims 1 to 6 in an individual packaging providing at least 15% of the vitamin C RDA, preferably at least 30%.

## Patentansprüche

1. Gefrorenes essbares Produkt, umfassend 5 bis 90% (Gew./Gew.) Früchte, vorzugsweise 10 bis 50%, bevorzugter weniger als 30%, 5 bis 90% (Gew./Gew.) eines auf Joghurt basierenden, gefrorenen Konfekts, vorzugsweise mehr als 40% und 5 bis 90% (Gew./Gew.) Getreide, vorzugsweise 10% bis 50%, bevorzugter weniger als 30%, worin das auf Joghurt basierende gefrorene Konfekt 35% bis 55% (Gew./Gew.) Joghurt und 45% bis 65% eines Gemisches umfassend Zucker, Molkereiprodukte, Stabilisatoren und Emulgatoren umfasst.

2. Gefrorenes essbares Produkt gemäß Anspruch 1, worin das auf Joghurt basierende gefrorene Konfekt einen Überlauf von zwischen 60% und 150%, vorzugsweise über 80%, bevorzugter zwischen 100% und 130% hat.

3. Gefrorenes essbares Produkt gemäß Anspruch 1 oder 2, worin die Früchte 35% bis 60% (Gew./Gew.) einzeln schockgefrostete Früchte umfassen.

4. Gefrorenes essbares Produkt gemäß Anspruch 1 oder 2, worin die Früchte 35% bis 65% (Gew./Gew.) verarbeitete Früchte umfassen.

5. Gefrorenes essbares Produkt gemäß Ansprüchen 1 bis 4, welches Acerolakirsche enthält.

6. Gefrorenes essbares Produkt gemäß Ansprüchen 1 bis 4, welches Acerolakirschsaft enthält.

7. Gefrorenes essbares Produkt gemäß Ansprüchen 1 bis 6 in einer einzelnen Verpackung, welches mindestens 15% der Vitamin C RDA, vorzugsweise mindestens 30% vorsieht.

## Revendications

1. Produit alimentaire congelé comprenant de 5 à 90 % (m/m) de fruits, de préférence de 10 à 50 %, plus préférablement moins de 30 %, de 5 à 90 % (m/m) d'une confiserie congelée à base de yogourt, de préférence plus de 40 % et de 5 à 90 % (m/m) de céréales, de préférence de 10 % à 50 %, plus préférablement moins de 30 %, dans lequel la confiserie congelée à base de yogourt comprend de 35 % à 55 % (m/m) de yogourt et de 45 % à 65 % d'un mélange comprenant des sucres, des produits laitiers, des stabilisants et des émulsifiants.

2. Produit alimentaire congelé selon la revendication 1 dans lequel la confiserie congelée à base de yogourt a un foisonnement compris entre 60 % et 150 %, de préférence supérieur à 80 %, plus préférablement entre 100 % et 130 %.

3. Produit alimentaire congelé selon la revendication 1 ou 2 dans lequel les fruits comprennent de 35 % à 60 % (m/m) de fruits traités.

4. Produit alimentaire congelé selon la revendication 1 ou 2 dans lequel les fruits représentent de 35 % à 65 % (m/m) de fruits traités.

5. Produit alimentaire congelé selon les revendications 1 à 4 contenant de la cerise des Antilles.

6. Produit alimentaire congelé selon les revendications 1 à 4 contenant du jus de cerise des Antilles.

7. Produit alimentaire congelé selon les revendications 1 à 6 dans un emballage individuel apportant au moins 15 % du RDA de vitamine C, de préférence au moins 30 %.
